# EUROPEAN PATENT SPECIFICATION

(11) **EP 2 076 423 B1**
(45) Date of publication and mention of the grant of the patent: **07.09.2011**
(21) Application number: 07835117.8
(22) Date of filing: 17.10.2007
(51) Int. Cl.: B62D 33/06, B62D 33/10

(54) **CAB SUSPENSION SYSTEM**
AUFHÄNGUNGSSYSTEM FÜR FAHRERHAUS
SYSTEME DE SUSPENSION POUR CABINE

(30) Priority: 23.10.2006 SE 0602235
(43) Date of publication of application: 08.07.2009
(73) Proprietor: Volvo Lastvagnar AB, 405 08 Göteborg (SE)
(72) Inventor: JOHANSSON, Olof, 446 96 Halanda (SE)
(74) Representative: Fröhling, Werner Otto
(86) International application number: PCT/SE2007/000916
(87) International publication number: WO 2008/051139

(56) References cited:
- WO-A-01/70560
- WO-A1-01/70560
- US-A- 2 549 102
- US-A- 5 253 853
- US-A- 5 957 231
- US-A- 6 073 714
- US-B1- 6 220 587
- US-B1- 6 220 587

## Description

### TECHNIC*AL FIELD

The present invention relates to a vehicle cab suspension system, and more particularly to such a system which incorporates a sway resisting device operable to resist side-to-side roll and side-to-side shifting of the cab during operation

### BACKGROUND ART

Vehicle cabs, and particularly cab over engine (COE) truck cabs, are generally supported on the vehicle frame through vibration isolating suspension systems. Generally these include springs which isolate truck frame vibration from the cab and the operator. On rounding sharp curves or in other situations the rear end of the cab being mounted on springs, such as air bellows, would have the tendency to shift laterally relative to the frame and/or roll side-to-side about the longitudinal axis of the truck. Some means to resist, or minimize, this side-to-side lateral shifting and roll is required

A problem with suspension systems is that although springs have been positioned adjacent opposite sides of the frame on which the cab is supported, the springs often have been insufficient to withstand cab rolling forces and lateral shifting forces, and thus excessive movement of the cab relative to the frame. This lateral movement, often termed sway, can be uncomfortable for the operator.

It is therefore desirable to provide a cab suspension system that is relatively soft to minimize vibration transmission from the frame to the cab. At the same time it is necessary to provide some means for minimizing side-to-side roll and side-to-side lateral shifting of the cab during operation.

A cab suspension system is disclosed in US 5 957 231 A. The system has a foundation bracket which is secured to an outer rail of the frame of the vehicle and pivotably connects an inner end of a track arm. The other end of the track arm is supported above the foundation bracket by an air spring, and a cab support yoke is pivotably connected between the ends of the track arm so as to support and secure the cab at a position along the track arm between its ends. Shock absorbers are provided between the foundation and the cab support yoke on both sides of the track arm. a height control valve maintains the height of the suspension system and elastomeric snubbers on the foundation bracket provide limits to the range of travel of the system.

A known sway resisting device is described in US 6 073 714. This device comprises a torsion, or sway, bar mounted between a pair of springs arranged at the rear of a cab. The device aims to provide vibration isolation through the springs while resisting vertical movement of one side of the cab relative to the other to limit cab roll and inhibiting lateral movement of the cab relative to the frame through the torsion bar. The suspension system includes a torsion bar operable to resist vertical movement of one side of the cab relative to the other side of the cab and to inhibit lateral movement of the cab relative to the frame. The torsion bar comprises a central section attached to the frame and opposed leg sections attached adjacent a pair of cab supporting springs. This arrangement of the springs and the torsion bar requires the torsion bar to be rigid to counteract relatively large cab movements, which makes it less effective for damping relatively small cab movements. Consequently the performance of the suspension system may only be optimized for a limited number of operating conditions.

The object of the invention is to provide an improved vehicle cab suspension system allowing vibration transmission from the frame to the cab to be minimized, while at the same time reducing side-to-side roll and side-to-side lateral shifting of the cab to improve ride comfort and handling during a variety of operating conditions.

### DISCLOSURE OF INVENTION

The object of the invention is achieved by a cab suspension system according to the invention, having the characteristic features defined in the appended claims.

According to a preferred embodiment the invention relates to a vehicle cab suspension system for supporting the vehicle cab on a longitudinal frame, where the cab is located over the frame. The cab suspension according to the invention is preferably, but not necessarily intended for forward tilting vehicle cabs. The cab suspension system may comprise a pair of laterally spaced spring means located at or near the rear end of the cab on opposite sides of the frame on which springs the cab is supported. The front end of the cab may be supported on suitable resilient or fluid dampers allowing a transverse swaying movement and/or a longitudinal rocking movement of the cab. A forward tilting cab may also be provided with suitable hinges or a mechanism that allows the cab to tilt forward upon release of a locking means at the rear end of the cab. The forward suspension and/or any associated forward tilting means are not part of the invention and will not be described in further detail.

The cab may be provided with a sway resisting suspension assembly operable to resist vertical movement of one side of the cab relative to the other side of the cab and to inhibit lateral swaying movement of the cab relative to the frame. Such a sway resisting suspension assembly may comprise substantially identical components on both sides of the frame. The component parts of the sway resisting suspension assembly are located on opposite sides of the vehicle and may comprise a lever arm arranged transversely relative to a longitudinal axis of the frame, which lever arm is attached to a first pivot joint on a support mounted to the frame. An inner end of the lever arm, extending towards the longitudinal axis of the vehicle relative to the first pivot joint, is attached to at least one damper means at a second pivot joint remote from the first pivot joint. The second pivot joint may be located in a space between the frame and the lower surface of the cab. An outer end of the lever arm, extending away from the longitudinal axis of the vehicle relative to the first pivot joint, is pivotably attached to a third pivot joint adjacent an outer side surface of the cab. The lever arm arrangement will transmit lateral vertical movement of the cab at the outer side edge thereof to the said damper means from opposite sides of the vehicle frame. The effect of this cab suspension arrangement is that the cab will be supported and sprung at or adjacent its outer side edges where the mounting of spring means is normally not practical or even possible. The lever effect provided by the lever arm will cause the spring means to provide an increased resisting force to vertical movement, as compared to a spring means mounted directly between the frame and the cab.

According to one embodiment, the spring means may be mounted between a pivot joint on the frame and a further pivot joint on the cab. In this case the spring means and the lever arms are mounted separate from each other. The spring means may comprise an air spring and/or a hydraulic damper, or a similar suitable suspension means. Each spring means may be mounted to the frame in front of or to the rear of its associated transverse lever arm. According to an alternative embodiment, the lever arm is arranged to support the spring means mounted between a pivot joint on the lever arm and a further pivot joint on the cab.

In the subsequent text, terms such as "inner" and "outer" or "inside" and "outside" are used to describe the relative transverse position of components in relation to a central longitudinal axis through the frame of the vehicle. Similarly, term such as "front" or "rear" are used to describe the relative longitudinal position of components in relation to the normal direction of travel of the vehicle.

The frame may comprise two longitudinal, substantially parallel beams extending in the longitudinal direction of the vehicle. The support for the first pivot joint may be attached to a longitudinal beam on opposite sides of the frame and extends upwards and outwards relative to a vertical longitudinal plane through the respective beam. Hence the first pivot joint is located between the second and the third pivot joints, a predetermined distance outside the said vertical plane. The second pivot joint may be located above the beam, between a position adjacent or inside the said vertical plane of the beam and the central longitudinal axis of the frame.

In operation, a tilting movement of the cab will cause the outer edge of the cab on one side of the vehicle to move downwards and act on the outer end of the lever arm. This causes the lever arm to transmit a force to the damper means, which will resist the movement. The spring means is simultaneously being compressed by the downward movement of the cab itself. At the opposite side of the vehicle, a simultaneous upwards movement of the outer edge of the cab is transmitted to the damper means by the corresponding lever arm. The cab movement will also apply an expanding force on the corresponding spring means. The displacement applied to the spring means by the movement of the cab and the lever action of the lever arms on the damper means will cause an increased resistance to the swaying movement of the cab, as compared to a conventional cab where the cab suspension is limited to a spring means mounted between the cab and the frame. In this way, even a relatively small cab displacement may create a relatively large resisting force.

The spring means may be a fluid spring, such as an air bellows or a hydraulic cylinder, or a resilient spring, such as a coil spring. Alternatively the spring means may comprise a combination of springs and/or dampers, such as a bellows and a coils spring, which springs/dampers may be mounted in series or in parallel. In this context, the term "series" refer to components mounted along a single axis, while the term "parallel" refer to components mounted side-by-side. The spring means is mounted between a suitable lower surface of the cab and an inner part of the lever arm extending transversely inwards from the first pivot joint. In order to allow movement of the cab relative to the lever arm, the spring means is pivotably mounted to the lever arm and the cab by pivot joints as described above.

The roll damper means may be a resilient spring, such as a coil spring, or a fluid spring, such as a telescopic hydraulic damper. Multiple dampers of the same or different types may be used, in series or in parallel, depending on the desired damping effect. In order to allow relative movement between the inner ends of the respective lever arm, the roll damper means may be attached to said ends by pivot joints. The distance between the inner ends of the respective lever arm may depend on the size, type and or number of roll damper means used.

The outer end of the lever arm is preferably attached to a lower surface of the cab as close as possible to the outer side surface delimiting the cab in the transverse direction of the vehicle. According to one example, the outer end of the lever arm may be attached to the cab by a resilient bushing, which allows a predetermined amount of movement between the cab and the arm. The resilient bushing may be made from any suitable natural or synthetic resilient material. Alternatively, the outer end of the lever arm may be attached to the cab by a pivotable intermediate linkage, in order to allow for a predetermined amount of movement in the same way as the resilient bushing described above. The linkage may be mounted between the said third pivot joint at the outer end of the lever and a pivot joint at the underside of the cab. In the latter case, a damper may be mounted between the lever arm adjacent the support for the first pivot joint of the lever arm and the cab adjacent the pivot joint for the pivotable linkage. This damper reduces and dampens any lateral, horizontal movement between the cab and the lever arm.

According to a preferred embodiment, the spring means is mounted between a longitudinal beam of the frame and the lower surface of the cab on opposite sides of the vehicle. This solution allows the lever arms to be mounted on a vehicle without modification of an existing cab suspension arrangement.

According to one version of the alternative embodiment, the lever arms on opposite sides of the vehicle extend towards each other a predetermined distance inwards from the first pivot joint, past the spring means between the cab and a respective longitudinal beam. The spring means may be attached to the longitudinal beam in front of or to the rear of the respective lever arm. Damping of the lateral swaying movement of the cab may be provided by connecting the inner ends by at least one roll damper means attached between the second pivot joints. In this embodiment, the roll damper means is preferably, but not necessarily, arranged in a substantially horizontal plane and/or between a pair of longitudinal beams making up the frame. The damper means is preferably arranged with its ends located symmetrically on either side of a vertical plane located at or near the central longitudinal axis of the frame. At least one roll damper means may be arranged in a horizontal or near horizontal position in the transverse vertical plane between the inner ends or inner parts of said lever arms. One or more such dampers of a suitable type may be used, in series or in parallel, depending on the desired damping effect. As stated above, examples of suitable roll damper means may be a coiled spring or a fluid damper.

According to a further version of the preferred embodiment, the inner ends of the lever arms on opposite sides of the vehicle extend past their respective spring means, as described above, and are joined to each other by at least one roll damper means for damping said swaying motion. The inner parts and ends of the respective lever arms may be located in a transverse vertical plane located at substantially right angles to the frame. Preferably the inner ends of the lever arms are vertically separated and extend at least to a common vertical plane in the longitudinal direction of the vehicle. The common vertical plane is preferably located at or near the central longitudinal axis of the frame. At least one roll damper means may be arranged in a vertical or near vertical position in the transverse vertical plane between the second pivot joints at the inner ends or inner parts of said lever arms. One or more such dampers of a suitable type may be used, in series or in parallel, depending on the desired damping effect. As stated above, examples of suitable roll damper means may be a coiled spring or a fluid damper. In order to allow relative movement between the inner ends of the respective lever arm, the roll damper means may be attached to said inner ends at the second pivot joints.

According to an alternative embodiment, the spring means is mounted between an inner part of the lever arm and the lower surface of the cab on opposite sides of the vehicle. In this solution the spring means mounted on the lever arm may replace the spring means mounted between a longitudinal beam of the frame and the lower surface of the cab.

According to one version of the alternative embodiment, the, spring means may be attached to the second pivot joint on the inner part of the lever arm at or near the inner end of the lever arm at a point below the cab. In this case the spring means and the damper means may form a single unit, or comprise a combination of spring and damper units mounted in series or in parallel between the lever arm and the cab. Examples of suitable spring means and damper means have been listed above.

According to a further version of the alternative embodiment, the lever arms on opposite sides of the vehicle extend a predetermined distance past the pivot joint of the spring means towards each other. Damping of the lateral swaying movement of the cab may be provided by connecting the inner ends by at least one roll damper means attached between the second pivot joints. In this embodiment, the roll damper means is preferably, but not necessarily, arranged in a substantially horizontal plane and/or between a pair of longitudinal beams making up the frame. The damper means is preferably located with its ends symmetrically on either side of a vertical plane located at or near the central longitudinal axis of the frame. At least one roll damper means may be arranged in a horizontal or near horizontal position in the transverse vertical plane between the inner ends or inner parts of said lever arms. One or more such dampers of a suitable type may be used, in series or in parallel, depending on the desired damping effect. As stated above, examples of suitable roll damper means may be a coiled spring or a fluid damper.

According to a further version of the alternative embodiment, the inner ends of the lever arms on opposite sides of the vehicle extend past their respective spring means and are joined to each other by at least one roll damper means for damping said swaying motion. The inner parts and ends of the respective lever arms may be located in a transverse vertical plane located at substantially right angles to the frame. Preferably the inner ends of the lever arms are vertically separated and extend at least to a common vertical plane in the longitudinal direction of the vehicle. The common vertical plane is preferably located at or near the central longitudinal axis of the frame. At least one roll damper means may be arranged in a vertical or near vertical position in the transverse vertical plane between the second pivot joints at the inner ends or inner parts of said lever arms. One or more such dampers of a suitable type may be used, in series or in parallel, depending on the desired damping effect. As stated above, examples of suitable roll damper means may be a coiled spring or a fluid damper. In order to allow relative movement between the inner ends of the respective lever arm, the roll damper means may be attached to said ends at the second pivot joints.

The cab suspension systems described in the above embodiments may also comprise a transverse torsion bar for providing resistance to side-to-side roll and side-to-side shifting. The torsion bar may preferably, but not necessarily, be located between the laterally spaced spring means. The torsion bar may be substantially U-shaped and comprise a transverse central section and a pair of opposed leg sections extending at an angle from opposite ends of said central section. The attachment points for the transverse section and its opposed leg sections are separated in the longitudinal direction of the vehicle. A central transverse portion of the torsion bar may be mounted in resilient bushings to a lower surface of the cab. Opposed leg sections extending at an angle from opposite ends of said central section may be mounted to the inner part of each lever arm remote from the first pivot joint, for instance at or near a vertical plane through the longitudinal axis of the respective longitudinal beam. Alternatively, the leg sections may be mounted adjacent the second pivot joint of the lever arm when the lever arm is arranged to support the spring means. Should the cab be urged to roll side-to-side about its longitudinal axis, such that one side of the rear of the cab would tend to move vertically relative to the opposite side of the cab the torsion bar will produce torsional resistance to such and will inhibit side-to-side roll. Further, if the cab should tend to roll to extend the spring means on one side and compress the spring means at the opposite side, the torsional rigidity of the torsion bar would resist this change in relative elevation to minimize, or moderate, such roll. A torsion bar of this type may be used as a single roll damper means or in combination with any one of the roll dampers described above.

In cases where the cab suspension system is intended for a cab-over vehicle in which the cab is forward tiltable, the support adjacent the first pivot joint of the lever arm may be provided with a latch for securing a rear end of the cab. When the latch is released on both sides of the vehicle the cab including the cab suspension system may be tilted upwards and forwards.

The invention also relates to a vehicle provided with a cab suspension system according to any one of the above-mentioned embodiments.

The embodiments listed above comprise a number of non-limiting examples. For instance, the spring and damper means described may be any suitable type of spring or damper, such as fluid, resilient, mechanical or magnetorheological dampers. Multiple springs or dampers of the same or different types may be used for the spring means or the roll damper means, either in series or in parallel, depending on the desired damping effect. Both the springs and the dampers may be progressive to provide and increasing resistance as the cab is moved from its normal position. Electrically controlled springs and dampers may be used to give the cab suspension different properties during different operating conditions, such as highway or off-road conditions.

### BRIEF DESCRIPTION OF DRAWINGS

In the following text, the invention will be described in detail with reference to the attached drawings. These schematic drawings are used for illustration only and do not in any way limit the scope of the invention. In the drawings:
- Figure 1: shows a schematic vehicle with a cab provided with a suspension system according to the invention;
- Figure 2: shows a schematic illustration of a cab suspension system according to a first version of a preferred embodiment of the invention;
- Figure 3: shows a schematic illustration of a cab suspension system according to a second version of the preferred embodiment;
- Figure 4: shows a schematic illustration of a cab suspension system according to a third version of the preferred embodiment;
- Figure 5: shows a schematic illustration of a cab suspension system according to a first version of an alternative embodiment of the invention;
- Figure 6: shows a schematic illustration of a cab suspension system according to a second version of the alternative embodiment;
- Figure 7: shows a schematic illustration of a cab suspension system according to a third version of the alternative embodiment;
- Figure 8: shows a schematic illustration of a cab suspension system according to a fourth version of the alternative embodiment; and
- Figure 9: shows a schematic illustration of a cab suspension system according to a fifth version of the alternative embodiment.

### EMBODIMENTS OF THE INVENTION

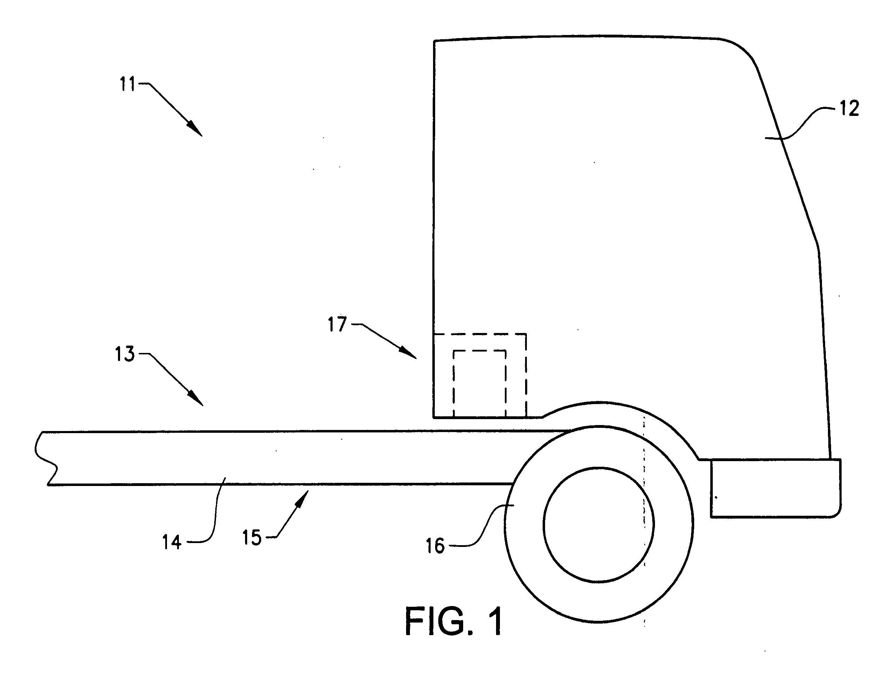

Figure 1 shows a vehicle 11, in this case a cab-over engine truck, illustrated with a cab 12 in its normal operative position. The cab may be tilted forwardly about a pivot (not shown) permitting access to the engine and other mechanical apparatus under the cab. The cab is mounted on an elongate frame 13 comprising a pair of laterally spaced, substantially parallel, horizontal beams 14, 15 onto which wheels are mounted, as that indicated generally at 16.

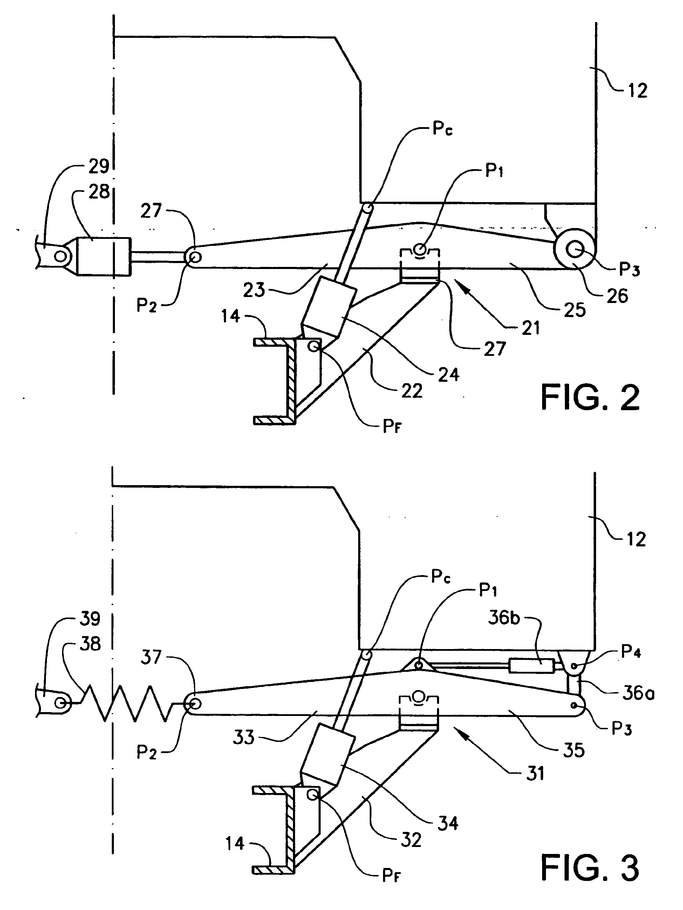

In order to provide ride comfort for the operator the rear end of cab 12 is supported on a cushioning suspension system adjacent the rear end of the cab indicated generally at 17. The suspension system 17 includes a right side suspension assembly mounted adjacent a first beam 14, and a left side suspension assembly mounted adjacent a second beam 15. The above reference numerals are the same for all embodiments and will be used for the same component parts throughout the embodiments described below. Since each of these suspension assemblies are substantially mirror images of each other only one assembly will be described in detail in connection with Figures 2-8, with the understanding that the assembly on the opposite side is substantially similar.

Figure 2 shows a rear view of a cab suspension assembly according to a first version of a preferred embodiment of the invention. The assembly comprises a lever arm 21 arranged transversely relative to a longitudinal axis of the beam 14 of the frame, which lever arm 21 is attached to a first pivot joint P₁ on a support 22 mounted to the beam 14. The cab 12 is supported by spring means 24 mounted between a pivot joint P_{F} attached to the beam 14 of the frame and a further pivot joint P_{C} on the lower surface of the cab 12. The spring means 24 is a pneumatic air spring, or bellows, connected to a source of pressurized air to maintain a selected degree of inflation to provide spring support and to maintain the rear end of the cab at a predetermined level relative to the frame. The spring means can alternatively comprise a spring unit and a damper unit, for instance an air spring and a telescopic hydraulic damper.

An inner part 23 of the lever arm is extended a predetermined distance in a substantially horizontal direction towards the longitudinal axis of the vehicle relative to the first pivot joint P₁. The inner part 23 is provided with a second pivot joint P₂ at the inner end of the lever arm 21. The second pivot joint P₂ is located between the beam 14 and the lower surface of the cab 12. An outer part 25 of the lever arm 21, extending away from the longitudinal axis of the vehicle relative to the first pivot joint P₁, is pivotably attached to a third pivot joint P₃ adjacent an outer side surface of the cab 12. The third pivot joint P₃ is mounted in a resilient rubber bushing 26 held in a bracket attached to the cab, said bushing allowing a predetermined amount of movement between the outer end of the lever arm 21 and the cab. The cab suspension assemblies on opposite sides of the vehicles are joined so as to cooperate to reduce lateral vertical movement of the cab. This is achieved by connecting the inner parts 23 of the respective lever arms 21 with a damper unit 28 attached to the respective the second pivot points P₂.

An inner end 27 of the lever arm 21 is terminated before it reaches the central longitudinal axis X of the vehicle. The inner end 27 comprises the second pivot joint P₂ and is connected to a central damper unit 28, which extends across the longitudinal axis X and is connected to an inner end 29 of the corresponding lever arm on the opposite side of the vehicle. In this case the central damper unit 28 is a hydraulic fluid damper that is pivotably mounted to the inner ends 27, 29 of each lever arm. Figure 2 shows the cab 12 and the damper 28 respectively in a horizontal, unloaded position In operation, when the cab is caused to sway a vertical displacement of the third pivot point P₃ will pivot the lever arm 21 about the first pivot joint P₁. The resulting movement of the inner end 27 of the lever arm, irrespective of direction, will be resisted by the central damper 28. This resistance to movement will assist the spring means 24 in reducing the lateral vertical movement of the cab.

Figure 3 shows a rear view of a cab suspension assembly according to a second version of the preferred embodiment of the invention. This embodiment is substantially identical to the assembly of Figure 2. Hence the assembly comprises a lever arm 31 arranged transversely relative to a longitudinal axis of the beam 14 of the frame, which lever arm 31 is attached to a first pivot joint P₁ on a support 32 mounted to the beam 14. The cab 12 is supported by spring means 24 mounted between a pivot joint P_{F} attached to the beam 14 of the frame and a further pivot joint P_{C} on the lower surface of the cab 12. The spring means 24 is a pneumatic air spring, or bellows, connected to a source of pressurized air to maintain a selected degree of inflation to provide spring support and to maintain the rear end of the cab at a predetermined level relative to the frame. The spring means can alternatively comprise a spring unit and a damper unit, for instance an air spring and a telescopic hydraulic damper.

An inner part 23 of the lever arm, extending in a substantially horizontal direction towards the longitudinal axis of the vehicle relative to the first pivot joint P₁, is provided with a second pivot joint P₂ at the inner end of the lever arm 21. The second pivot joint P₂ is located between the beam 14 and the lower surface of the cab 12. An outer part 35 of the lever arm 31, extending away from the longitudinal axis of the vehicle relative to the first pivot joint P₁, is pivotably attached to a third pivot joint P₃ adjacent an outer side surface of the cab 12. The third pivot joint P₃ is connected to the underside of the cab 12 by a pivotable linkage 36a. The linkage 36a is mounted between the said third pivot joint P₃ at the outer end of the lever 31 and a pivot joint P₄ at the underside of the cab 12. A damper 36b is mounted between a pivot joint on the lever arm 31 adjacent the support for the first pivot joint P₁ and the cab adjacent the pivot joint P₄ for the pivotable linkage 36a.

The cab suspension assemblies on opposite sides of the vehicles are joined so as to cooperate to reduce lateral vertical movement of the cab. This is achieved by connecting the inner parts 33 of the respective lever arms 31 with a damper unit 38 attached to the respective the second pivot points P₂. An inner end 37 of the lever arm 31 is terminated before it reaches the central longitudinal axis X of the vehicle. The assembly of Figure 3 differs from that of Figure 2 in that the inner end 37 of the lever arm is connected to a central damper unit 38 in the form of a coiled spring, which extends across the longitudinal axis X and is connected to an inner end 39 of a corresponding lever arm on the opposite side of the vehicle. The coiled spring is pivotably mounted to the inner ends 37, 39 of each lever arm.

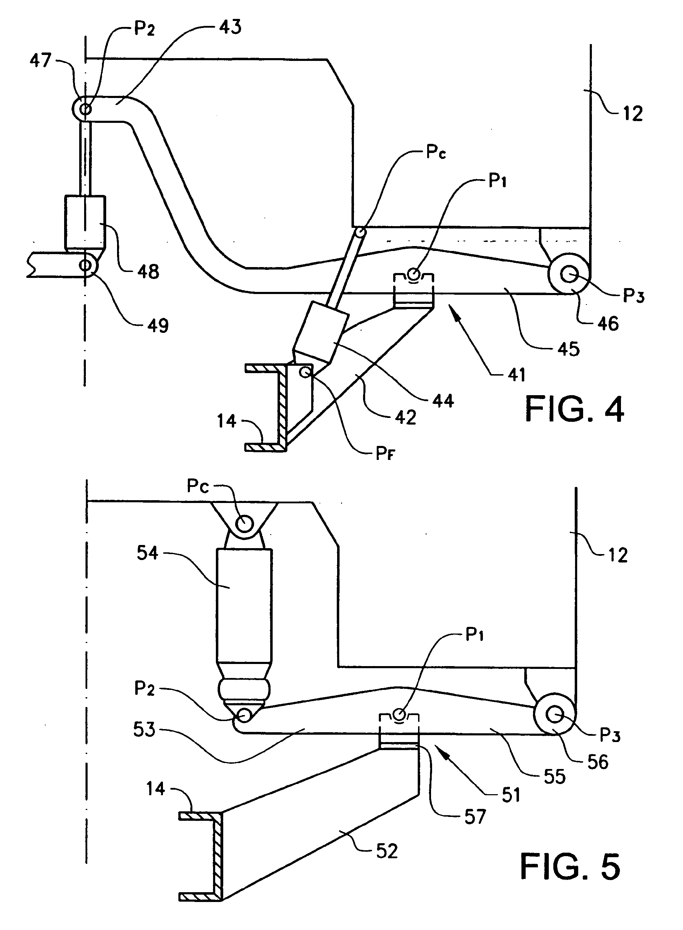

Figure 4 shows a rear view of a cab suspension assembly according to a third version of the preferred embodiment of the invention. This embodiment is similar to the assembly of Figure 2. The assembly comprises a lever arm 41 arranged transversely relative to a longitudinal axis of the beam 14 of the frame, which lever arm 41 is attached to a first pivot joint P₁ on a support 42 mounted to the beam 14. The cab 12 is supported by spring means 24 mounted between a pivot joint P_{F} attached to the beam 14 of the frame and a further pivot joint P_{C} on the lower surface of the cab 12. The spring means 24 is a pneumatic air spring, or bellows, connected to a source of pressurized air to maintain a selected degree of inflation to provide spring support and to maintain the rear end of the cab at a predetermined level relative to the frame. The spring means can alternatively comprise a spring unit and a damper unit, for instance an air spring and a telescopic hydraulic damper.

An inner part 23 of the lever arm, extending in a substantially horizontal direction towards the longitudinal axis of the vehicle relative to the first pivot joint P₁, is provided with a second pivot joint P₂ at the inner end of the lever arm 21. The second pivot joint P₂ is located between the beam 14 and the lower surface of the cab 12. An outer part 45 of the lever arm 41, extending away from the longitudinal axis of the vehicle relative to the first pivot joint P₁, is pivotably attached to a third pivot joint P₃ adjacent an outer side surface of the cab 12. The third pivot joint P₃ is mounted in a resilient rubber bushing 46 held in a bracket attached to the cab, said bushing allowing a predetermined amount of movement between the outer end of the lever arm 41 and the cab.

The assembly of Figure 4 differs from that of Figure 2 in that the inner part 43 of the lever arm 41 comprises a first section extending inwards to in a substantially horizontal direction, a second section curving inwards and upwards, and an inner end 47 located in a substantially horizontal direction. The inner end 47 of the lever arm 41 extends to the central longitudinal axis X of the vehicle. The second pivot point P₂ at the inner end 47 of the lever arm is connected to a central damper unit 48, which extends vertically along the longitudinal axis X. The opposite end of the damper unit 48 is connected to an inner end 49 of a corresponding lever arm on the opposite side of the vehicle, which inner end 49 extends in a substantially horizontal direction from the corresponding second pivot joint to the central longitudinal axis X. In this case the central damper unit 48 is a hydraulic fluid damper that is pivotably mounted to the vertically separated inner ends 47, 49 of each lever arm. Figure 4 shows the cab 12 and the damper unit 48 respectively in their unloaded positions. In operation, when the cab is caused to sway, a vertical downwards displacement of the third pivot point P₃ will pivot the lever arm 41 about the first pivot joint P₁. The resulting upward movement of the inner end 47 of the lever arm and a simultaneous downward movement of the inner end 49 of the corresponding opposite lever arm will be resisted by the central damper 48. This resistance to movement will assist the spring means 44 in reducing the lateral vertical movement of the cab.

Figure 5 shows a rear view of a first version of an alternative embodiment of the invention. The figure shows the cab suspension assembly on one side of the vehicle, said assembly comprising a lever arm 51 arranged transversely relative to a longitudinal axis of the beam 14 of the frame, which lever arm 51 is attached to a first pivot joint P₁, on a support 52 mounted to the beam 14.

An inner part 53 of the lever arm, extending towards the longitudinal axis of the vehicle relative to the first pivot joint P₁, is arranged to support a spring means 54 mounted between a second pivot joint P₂ at the inner end of the lever arm 51 and a further pivot joint P_{C} on the lower surface of the cab 12. In this case the spring means and the damper means form a single unlit, although a combination comprising a spring and a damper unit mounted in series or in parallel between the lever arm and the cab is also possible. The spring means 54 is a pneumatic air spring, or bellows, connected to a source of pressurized air to maintain a selected degree of inflation to provide spring support and to maintain the rear end of the cab at a predetermined level relative to the frame. The second pivot joint P₂ is located between the beam 14 and the lower surface of the cab 12. An outer part 55 of the lever arm 51, extending away from the longitudinal axis of the vehicle relative to the first pivot joint P₁, is pivotably attached to a third pivot joint P₃ adjacent an outer side surface of the cab 12. The third pivot joint P₃ is mounted in a resilient rubber bushing 56 held in a bracket attached to the cab, said bushing allowing a predetermined amount of movement between the outer end of the lever arm 51 and the cab. The lever arm arrangement will transmit lateral vertical movement of the cab at the outer side edge thereof to the respective spring means on opposite sides of the vehicle frame. The effect of this cab suspension arrangement is that the cab will be supported and sprung at or adjacent its outer side edges, and that the lever effect will cause the bellows to provide an increased resisting force to vertical movement.

The support 52 is provided with a cab mounting bracket 57 comprising a latch (not shown) adjacent the first pivot joint P₁ of the lever arm 51 for securing the rear end of the cab. When the latch is released on both sides of the vehicle the cab including the cab suspension system may be tilted upwards and forwards. A hydraulic fluid pressure supply line is connected to the latch in both suspension assemblies, such that the application, or release, of hydraulic pressure will serve to shift latch in a latch mechanism between its latched and unlatched positions. In its latched position the latch engages a latch pin to secure the cab mounting bracket to the suspension system and in its unlatched position the latch is released from the latch pin allowing the cab mounting bracket to move out of the latch mechanism to release the cab for forward tilting.

In an alternative embodiment where the cab is not tiltable, the first pivot joint P₁ of the lever arm 51 is provided with a journal at the end of the support 52 for securing the rear end of the cab to the frame.

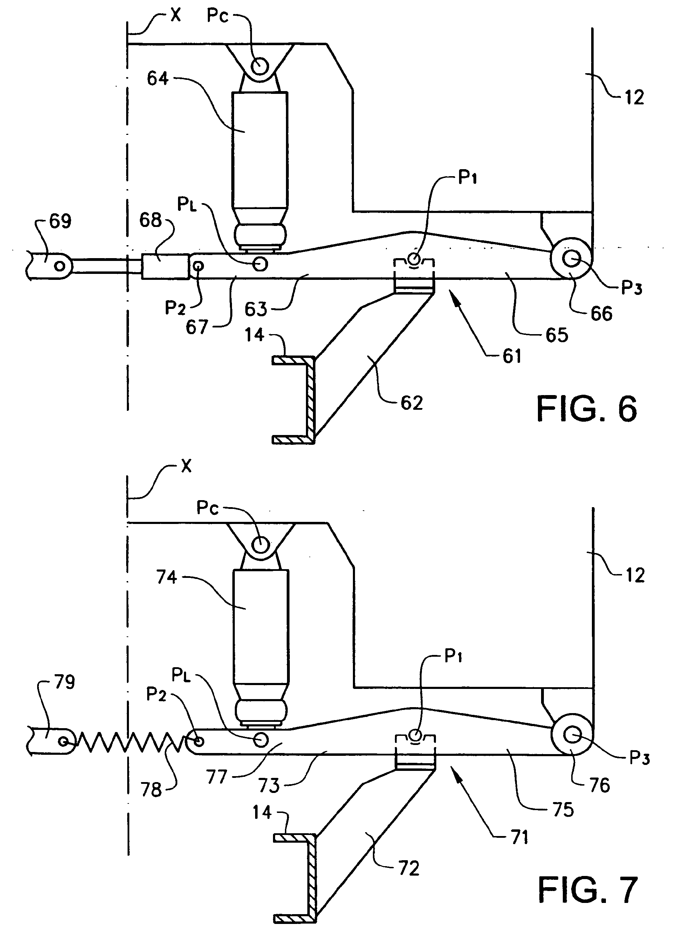

Figure 6 shows, a rear view of a cab suspension assembly according to a second version of the alternative embodiment of the invention. To a great extent this embodiment corresponds to the assembly of Figure 5. Consequently the assembly comprises a lever arm 61 arranged transversely relative to a longitudinal axis of the beam 14 of the frame, which lever arm 61 is attached to a first pivot joint P₁ on a support 62 mounted to the beam 14. An inner part 63 of the lever arm extends in a substantially horizontal direction towards the longitudinal axis of the vehicle relative to the first pivot joint P₁. The inner part of the lever arm is arranged to support a spring means 64 mounted to a pivot joint P_{L} on the lever arm and a further pivot joint P_{C} on the lower surface of the cab 12. The lower pivot joint P_{L} of the spring 64 is located between a second pivot joint P₂ at the inner end of the lever arm 61 and the first pivot joint P₁. The spring means 64 is a pneumatic air spring, or bellows, connected to a source of pressurized air to maintain a selected degree of inflation to provide spring support and to maintain the rear end of the cab at a predetermined level relative to the frame. The second pivot joint P₂ is located between the beam 14 and the lower surface of the cab 12. An outer part 65 of the lever arm 61, extending away from the longitudinal axis of the vehicle relative to the first pivot joint P₁, is pivotably attached to a third pivot joint P₃ adjacent an outer side surface of the cab 12. The third pivot joint P₃ is mounted in a resilient rubber bushing 66 held in a bracket attached to the cab, said bushing allowing a predetermined amount of movement between the outer end of the lever arm 61 and the cab.

The assembly of Figure 6 differs from that of Figure 5 in that the assemblies on opposite sides of the vehicles are joined so as to cooperate to reduce lateral vertical movement of the cab. This is achieved by extending the inner part 63 of the lever arm 61 a predetermined distance in a substantially horizontal direction towards the longitudinal axis of the vehicle relative to the first pivot joint P₁. An inner end 67 of the lever arm 61 is terminated before it reaches the central longitudinal axis X of the vehicle. The pivot joint P₂ at the inner end 67 is connected to a central damper unit 68, which extends across the longitudinal axis X and is connected to a corresponding pivot joint at an inner end 69 of a corresponding lever arm on the opposite side of the vehicle. In this case the central damper unit 68 is a hydraulic fluid damper that is pivotably mounted to the inner ends 67, 69 of each lever arm. Figure 6 shows the cab 12 and the damper 68 respectively in a horizontal, unloaded position In operation, when the cab is caused to sway, a vertical displacement of the third pivot point P₃ will pivot the lever arm 61 about the first pivot joint P₁. The resulting movement of the inner end 67 of the lever arm, irrespective of direction, will be resisted by the central damper 68. This resistance to movement will assist the spring means 64 in reducing the lateral vertical movement of the cab.

Figure 7 shows a rear view of a cab suspension assembly according to a third version of the alternative embodiment of the invention. This embodiment is substantially identical to the assembly of Figure 6. Hence the assembly comprises a lever arm 71 arranged transversely relative to a longitudinal axis of the beam 14 of the frame, which lever arm 71 is attached to a first pivot joint P₁ on a support 72 mounted to the beam 14. An inner part 73 of the lever arm extends towards the longitudinal axis of the vehicle and is terminated with a second pivot joint P₂ at the inner end of the lever arm 71. The spring means 74 is a pneumatic air spring, or bellows, connected to a source of pressurized air to maintain a selected degree of inflation to provide spring support and to maintain the rear end of the cab at a predetermined level relative to the frame. The second pivot joint P₂ is located between the beam 14 and the tower surface of the cab 12. An outer part 75 of the lever arm 71, extending away from the longitudinal axis of the vehicle relative to the first pivot joint P₁, is pivotably attached to a third pivot joint P₃ adjacent an outer side surface of the cab 12. The third pivot joint P₃ is mounted in a resilient rubber bushing 76 held in a bracket attached to the cab, said bushing allowing a predetermined amount of movement between the outer end of the lever arm 71 and the cab.

As in Figure 6, the assemblies on opposite sides of the vehicles are joined so as to cooperate to reduce lateral vertical movement of the cab. This is achieved by extending the inner part 73 of the lever arm 71 a predetermined distance in a substantially horizontal direction towards the longitudinal axis of the vehicle relative to the first pivot joint P₁. An inner end 77 of the lever arm 71 is terminated before it reaches the central longitudinal axis X of the vehicle. The inner part of the lever arm is arranged to support a spring means 74 mounted to a pivot joint P_{L} on the lever arm and a further pivot joint P_{C} on the lower surface of the cab 12. The lower pivot joint P_{L} of the spring 74 is located between the second pivot joint P₂ at the inner end of the lever arm 71 and the first pivot joint P₁. The assembly of Figure 7 differs from that of Figure 6 in that the inner end 77 of the lever arm is connected to a central damper unit 78 in the form of a coiled spring, which extends across the longitudinal axis X and is connected to an inner end 79 of a corresponding lever arm on the opposite side of the vehicle. The coiled spring is pivotably mounted to the inner ends 77, 79 of each lever arm.

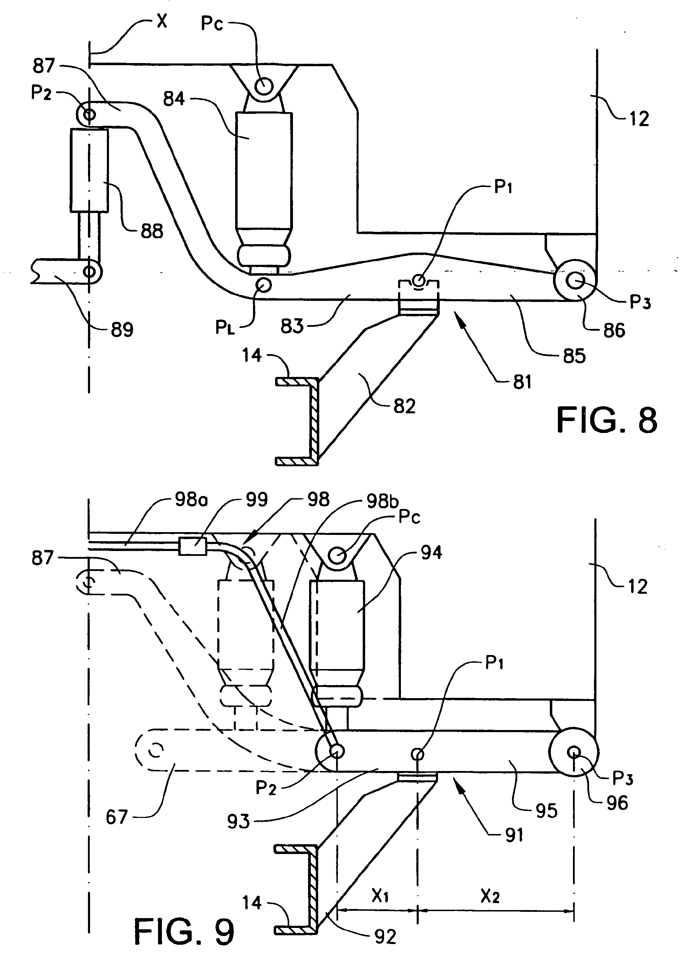

Figure 8 shows a rear view of a cab suspension assembly according to a fourth version of the alternative embodiment of the invention. This embodiment is similar to the assembly of Figure 6. The assembly comprises a lever arm 81 arranged transversely relative to a longitudinal axis of the beam 14 of the frame, which lever arm 81 is attached to a first pivot joint P₁ on a support 82 mounted to the beam 14. An inner part 23 of the lever arm, extending in a substantially horizontal direction towards the longitudinal axis of the vehicle rotative to the first pivot joint P₁, is provided with a second pivot joint P₂ at the inner end of the lever arm 21. The second pivot joint P₂ is located between the beam 14 and the lower surface of the cab 12. The inner part of the lever arm 81 is arranged to support a spring means 84 mounted to a pivot joint on the lever arm 81 and a further pivot joint P_{C} on the lower surface of the cab 12. The lower pivot joint of the spring 84 is located between the second pivot joint P₂ at the inner end of the lever arm 81 and the first pivot joint P₁. The spring means 84 is a pneumatic air spring, or bellows, connected to a source of pressurized air to maintain a selected degree of inflation to provide spring support and to maintain the rear end of the cab at a predetermined level relative to the frame. The second pivot joint P₂ is located between the beam 14 and the lower surface of the cab 12. An outer part 85 of the lever arm 81, extending away from the longitudinal axis of the vehicle relative to the first pivot joint P₁, is pivotably attached to a third pivot joint P₃ adjacent an outer side surface of the cab 12. The third pivot joint P₃ is mounted in a resilient rubber bushing 86 held in a bracket attached to the cab, said bushing allowing a predetermined amount of movement between the outer end of the lever arm 81 and the cab.

The assembly of Figure 8 differs from that of Figure 6 in that the inner part 83 of the lever arm 81 comprises a first section extending from the first pivot joint P₁ inwards to the second pivot point P₂ in a substantially horizontal direction, a second section curving inwards and upwards, and an inner end 87 located in a substantially horizontal direction. The inner end 87 of the lever arm 81 extends to the central longitudinal axis X of the vehicle. The inner end 87 of the lever arm is connected to a central damper unit 88, which extends vertically along the longitudinal axis X. The opposite end of the damper unit 88 is connected to an inner end 89 of a corresponding lever arm on the opposite side of the vehicle, which inner end 89 extends in a substantially horizontal direction from the corresponding second pivot joint to the central longitudinal axis X. In this case the central damper unit 88 is a hydraulic fluid damper that is pivotably mounted to the vertically separated inner ends 87, 89 of each lever arm. Figure 8 shows the cab 12 and the damper unit 88 respectively in their unloaded positions. In operation, when the cab is caused to sway, a vertical downwards displacement of the third pivot point P₃ will pivot the lever arm 81 about the first pivot joint P₁. The resulting upward movement of the inner end 87 of the lever arm and a simultaneous downward movement of the inner end 89 of the corresponding opposite lever arm will be resisted by the central damper 88. This resistance to movement will assist the spring means 84 in reducing the lateral vertical movement of the cab.

Figure 9 shows a rear view of a cab suspension assembly according to a fifth version of the alternative embodiment of the invention. The spring assembly in this embodiment can be used separately or in combination with the embodiments described above. The assembly comprises a lever arm 91 arranged transversely relative to a longitudinal axis of the beam 14 of the frame, which lever arm 91 is attached to a first pivot joint P₁ on a support 92 mounted to the beam 14. An inner part 93 of the lever arm, extending towards the longitudinal axis of the vehicle relative to the first pivot joint P₁, is arranged to support a spring means 94 mounted between a second pivot joint P₂ at the inner end of the lever arm 91 and a further pivot joint P_{C} on the lower surface of the cab 12. The spring means 94 is a pneumatic air spring, or bellows, connected to a source of pressurized air to maintain a selected degree of inflation to provide spring support and to maintain the rear end of the cab at a predetermined level relative to the frame. The second pivot joint P₂ is located between the beam 14 and the lower surface of the cab 12. An outer part 95 of the lever arm 91, extending away from the longitudinal axis of the vehicle relative to the first pivot joint P₁, is pivotably attached to a third pivot joint P₃ adjacent an outer side surface of the cab 12. The third pivot joint P₃ is mounted in a resilient rubber bushing 96 held in a bracket attached to the cab, said bushing allowing a predetermined amount of movement between the outer end of the lever arm 91 and the cab.

The assembly of Figure 9 its further provided with a transverse torsion bar 98 for providing resistance to side-to-side roll and side-to-side shifting. The torsion bar 98 is schematically indicated as being located between the laterally spaced spring means 94 on either side of the vehicle. The torsion bar 98 is substantially U-shaped and comprises a transverse central section 98a and a pair of opposed leg sections 98b extending at an angle from opposite ends of said central section 98a. The attachment points for the transverse section 98a and its opposed leg sections 98b are separated in the longitudinal direction of the vehicle (not shown). In this way, any vertical displacement of one or both opposed leg sections 98b will cause the central section 98a to be subjected to a torque, whereby the movement of the opposite leg sections 98b is resisted. The transverse central section 98a of the torsion bar 98 is mounted in resilient bushings 97 (only one shown) to a lower surface of the cab 12. The opposed leg sections 98b extending at an angle from opposite ends of said central section 98a may be mounted adjacent the second pivot joint P₂ of the lever arm 91 arranged to support the spring means 94. In operation, when the cab is caused to sway, a vertical - displacement of the third pivot point P₃ will pivot the lever arm 91 about the first pivot joint P₁. The resulting movement of the inner part 93 of the lever arm, irrespective of direction, will be resisted by the torsion bar 98 connecting the lever arms on both sides of the vehicle. This resistance to movement will assist the spring means 94 in reducing the lateral vertical movement of the cab. A torsion bar of this type may be used as a single roll damper means or in combination with any one of the roll dampers described in Figures 2-8 above.

As indicated in Figure 9, the support 92 for the first pivot joint P₁ is attached to the longitudinal beam 14 and extends upwards and outwards relative to a longitudinal vertical plane through the central section of the U-shaped beam. Hence the first pivot joint P₁ is located between the second and the third pivot joints P₂, P₃, a predetermined distance outside the said vertical plane. The second pivot joint P₂ is located above the beam 14, in a position adjacent or outside the said vertical plane and the third pivot joint P₃ is located adjacent the outer side edge of the cab. In the example shown, a first distance X₁ between the first and the second pivot joint is equal to a second distance X₂ between the first and the third pivot joint P₁, P₃.

However, a desired lever effect can be achieved by modifying the length of the respective inner and outer parts 93, 95 of the lever arm 91 relative to a fixed first pivot joint P₁, or by selecting a suitable position for the support 92 of the first pivot joint P₁. For instance, the first distance X₁ between the first and second pivot joints P₁, P₂ can be equal to or less than the distance X₂ between the first and third pivot joints P₁, P₃. However, the distance X₁ is preferably not less than half the distance X₂. Hence, in the latter example x₂/2 ≤x₁ ≤x₂. The selection of suitable locations of the respective pivot joint in order to achieve a desired lever ratio can be applied to all the above embodiments, including horizontally extended lever arms 67 (see Figure 6) and curved lever arms 87 (see Figure 8) as indicated by dashed lines in Figure 9. The figure also schematically illustrates alternative positions for the spring means with different lever ratios.

The invention is not limited to the above examples, but may be varied freely within the scope of the appended claims.

## Claims

1. A vehicle cab suspension system (17) supporting the cab (12) on a longitudinal frame (13), where the cab (12) is located over the frame (13), said cab suspension system (17) comprising a pair of laterally spaced spring means (24, 34, 44, 54, 64, 74, 84, 94) on opposite sides of the frame (13) on which spring means (24, 34, 44, 54, 64, 74, 84, 94) the cab (12) is supported, and a sway resisting device operable to resist vertical movement of one side of the cab (12) relative to the other side of the cab (12) and to inhibit lateral swaying movement of the cab (12) relative to the frame (13), in which on opposite sides of the vehicle (11) the sway resisting device comprises a lever arm (21, 31, 41, 51, 61, 71, 81, 91) arranged transversely relative to the frame (13) **characterized in that**, the lever arm (21, 31, 41, 51, 61, 71, 81, 91) is attached to a first pivot joint (P1) on a support (22, 32, 42, 52, 62, 72, 82, 92) mounted to the frame (13), an inner end (27, 37, 47, 57, 67, 77, 87, 97) of the lever arm (21, 31, 41, 51, 61, 71, 81, 91) is attached to a damper means (28, 38, 48, 58, 68, 78, 88, 98) at a second pivot joint (P2) remote from the first pivot joint (P1), and an outer end of the lever arm (21, 31, 41, 51, 61, 71, 81, 91) is attached to a third pivot joint (P3) adjacent an outer side surface of the cab (12).

2. Cab suspension system according to claim 1, **characterized in that** the outer end of the lever arm (21, 31, 41, 51, 61, 71, 81, 91) is attached to the cab (12) by a resilient bushing (26, 46, 56, 66, 76, 86, 96).

3. Cab suspension system according to claim 1, **characterized in that** the outer end (35) of the lever arm (31) is attached to the cab (12) by an intermediate pivotable linkage (36a).

4. Cab suspension system according to claim 3, **characterized in that** a damper (36b) is mounted between the lever arm (31) adjacent the support (32) for the first pivot joint (P1) of the lever arm (31) and the cab (12) adjacent the pivotable linkage (36a).

5. Cab suspension system according to claim 1, **characterized in that** the spring means (64, 74) is attached to an inner part (63, 73) of the lever arm (61, 71) at a point (PL) below the cab (12).

6. Cab suspension system according to claim 5, **characterized in that** the spring means (24, 34, 44, 54, 64, 74, 84, 94) and the damper means (28, 38, 48, 58, 68, 78, 88, 98) is a combined unit (64, 74).

7. Cab suspension system according to claim 1, **characterized in that** the spring means (24, 34, 44, 54, 84, 94) is attached to the frame (13) at a point (PF) below the cab (12).

8. Cab suspension system according to claim 7, **characterized in that** the spring means (24, 34, 44, 54, 84, 94) is attached to the frame (13) at a point (PF) longitudinally displaced from the lever arm (21, 31, 41, 51, 81, 91).

9. Cab suspension system according to claim 5 or claim 7, **characterized in that** the inner ends (27, 37, 47, 57, 67, 87; 29, 49, 69, 89) of the lever arms (21, 31, 41, 61, 71, 81) on opposite sides of the vehicle (11) are connected by at least one damper means (28, 38, 48, 68, 78, 88).

10. Cab suspension system according to claim 9, **characterized in that** the damper means (28, 38, 68, 78) is arranged in a horizontal plane.

11. Cab suspension system according to claim 9, **characterized in that that** the inner ends (47, 87; 49, 89) of the lever arms (41, 81) are vertically separated and extend at least to a common vertical plane in the longitudinal direction of the vehicle (11).

12. Cab suspension system according to claim 11, **characterized in that** the damper means (48, 88) is arranged in a transverse vertical plane between the inner ends (47, 87; 49, 89) of said lever arms (41, 81).

13. Cab suspension system according to claim 12, **characterized in that** the damper means (48, 88) is arranged in a vertical position.

14. Cab suspension system according to claim 9, **characterized in that** the damper means (38, 78) is a coiled spring.

15. Cab suspension system according to claim 9, **characterized in that** the damper means (28, 48, 58, 68, 88) is a fluid damper.

16. Cab suspension system according to any one of the above claims 1-13, **characterized in that** a transverse torsion bar (98) is mounted between inner parts (93) of the lever arms (91) at a position remote from the first pivot joint (P1).

17. Cab suspension system according to claim 16, **characterized in that** a transverse central section (98a) of the torsion bar (98) is mounted to a lower surface of the cab (12) and opposed leg sections (98b) extending at an angle from opposite ends of said central section (98a) are mounted adjacent the second pivot joint (P2) of the respective lever arms (91).

18. Cab suspension system according to any one of the above claims 1-17, **characterized in that** the cab (12) is a forward tiltable cab (12) and that the support (22, 32, 42, 52, 62, 72, 82, 92) adjacent the first pivot joint (P1) of the lever arm (21, 31, 41, 51, 61, 71, 81, 91) is provided with a latch for securing a rear end of the cab (12).

19. A vehicle (11) provided with a cab suspension system (17) according to claim 1.

## Patentansprüche

1. Aufhängungssystem (17) für ein Fahrzeugfahrerhaus, welches das Fahrerhaus (12) auf einem Längsrahmen (13) trägt, wobei das Fahrerhaus (12) über dem Rahmen (13) angeordnet ist und das Aufhängungssystem (17) für ein Fahrerhaus
- ein Paar von seitlich zueinander im Abstand angeordneten Federeinrichtungen (24, 34, 44, 54, 64, 74, 84, 94) auf entgegengesetzten Seiten des Rahmens (13), auf denen das Fahrerhaus (12) gelagert ist, und
- eine Wankwiderstandsvorrichtung umfasst, die einer Vertikalbewegung einer Seite des Fahrerhauses (12) relativ zur anderen Seite des Fahrerhauses (12) einen Widerstand entgegensetzt und für ein Hemmen einer seitlichen Wankbewegung des Fahrerhauses (12) relativ zum Rahmen (13) betätigbar ist, wobei die Wankwiderstandsvorrichtung auf gegenüberliegenden Seiten des Fahrzeugs (11) einen Hebelarm (21, 31, 41, 51, 61, 71, 81, 91) umfasst, der relativ zum Rahmen (13) in Querrichtung angeordnet ist,
**dadurch gekennzeichnet,**
- **dass** der Hebelarm (21, 31, 41, 51, 61, 71, 81, 91) an einem ersten Drehgelenk (P1) auf einem am Rahmen (13) montierten Träger (22, 32, 42, 52, 62, 72, 82, 92) angebracht ist,
- **dass** ein inneres Ende (27, 37, 47, 57, 67, 77, 87, 97) des Hebelarms (21, 31, 41, 51, 61, 71, 81, 91) an einer Dämpfungseinrichtung (28, 38, 48, 58, 68, 78, 88, 98) an einem zweiten Drehgelenk (P2) entfernt von dem ersten Drehgelenk (P1) angebracht ist und
- **dass** ein äußeres Ende des Hebelarms (21, 31, 41, 51, 61, 71, 81, 91) an einem dritten Drehgelenk (P3) angrenzend an eine äußere Seitenfläche des Fahrerhauses (12) angebracht ist.

2. Aufhängungssystem für ein Fahrerhaus nach Anspruch 1, **dadurch gekennzeichnet, dass** das äußere Ende des Hebelarms (21, 31, 41, 51, 61, 71, 81,91) durch eine elastische Buchse (26, 46, 56, 66, 76, 86, 96) an dem Fahrerhaus (12) angebracht ist.

3. Aufhängungssystem für ein Fahrerhaus nach Anspruch 1, **dadurch gekennzeichnet, dass** das äußere Ende (35) des Hebelarms (31) durch eine schwenkbare Zwischenverbindung (36a) an dem Fahrerhaus (12) angebracht ist.

4. Aufhängungssystem für ein Fahrerhaus nach Anspruch 3, **dadurch gekennzeichnet, dass** zwischen dem Hebelarm (31) angrenzend an den Träger (32) für das erste Drehgelenk (P1) des Hebelarms (31) und dem Fahrerhaus (12) angrenzend an die schwenkbare Verbindung (36a) ein Dämpfer (36b) montiert ist.

5. Aufhängungssystem für ein Fahrerhaus nach Anspruch 1, **dadurch gekennzeichnet, dass** die Federeinrichtung (64, 74) an einem inneren Teil (63, 73) des Hebelarms (61, 71) an einem Punkt (PL) unter dem Fahrerhaus (12) angebracht ist.

6. Aufhängungssystem für ein Fahrerhaus nach Anspruch 5, **dadurch gekennzeichnet, dass** die Federeinrichtung (24, 34, 44, 54, 64, 74, 84, 94) und die Dämpfungseinrichtung (28, 38, 48, 58, 68, 78, 88, 98) eine kombinierte Einheit (64, 74) sind.

7. Aufhängungssystem für ein Fahrerhaus nach Anspruch 1, **dadurch gekennzeichnet, dass** die Federeinrichtung (24, 34, 44, 54, 84, 94) an dem Rahmen (13) an einem Punkt (PF) unter dem Fahrerhaus (12) angebracht ist.

8. Aufhängungssystem für ein Fahrerhaus nach Anspruch 7, **dadurch gekennzeichnet, dass** die Federeinrichtung (24, 34, 44, 54, 84, 94) an dem Rahmen (13) an einem Punkt (PF) angebracht ist, der zu dem Hebelarm (21, 31, 41, 51, 81, 91) in Längsrichtung versetzt ist.

9. Aufhängungssystem für ein Fahrerhaus nach Anspruch 5 oder Anspruch 7, **dadurch gekennzeichnet, dass** die inneren Enden (27, 37, 47, 57, 67, 77, 87; 29, 49, 69, 89) der Hebelarme (21, 31, 41, 61, 71, 81) auf entgegengesetzten Seiten des Fahrzeugs (11) durch wenigstens eine Dämpfungseinrichtung (28, 38, 48, 68, 78, 88) verbunden sind.

10. Aufhängungssystem für ein Fahrerhaus nach Anspruch 9, **dadurch gekennzeichnet, dass** die Dämpfungseinrichtung (28, 38, 68, 78) in einer horizontalen Ebene angeordnet ist.

11. Aufhängungssystem für ein Fahrerhaus nach Anspruch 9, **dadurch gekennzeichnet, dass** die inneren Enden (47, 87; 49, 89) der Hebelarme (41, 81) vertikal getrennt sind und sich wenigstens bis zu einer gemeinsamen vertikalen Ebene in Längsrichtung des Fahrzeugs (11) erstrecken.

12. Aufhängungssystem für ein Fahrerhaus nach Anspruch 11, **dadurch gekennzeichnet, dass** die Dämpfungseinrichtung (48, 88) in einer quer verlaufenden vertikalen Ebene zwischen den inneren Enden (47, 87; 49, 89) der Hebelarme (41, 81) angeordnet ist.

13. Aufhängungssystem für ein Fahrerhaus nach Anspruch 12, **dadurch gekennzeichnet, dass** die Dämpfungseinrichtung (48, 88) an einer vertikalen Position angeordnet ist.

14. Aufhängungssystem für ein Fahrerhaus nach Anspruch 9, **dadurch gekennzeichnet, dass** die Dämpfungseinrichtung (38, 78) eine Schraubenfeder ist.

15. Aufhängungssystem für ein Fahrerhaus nach Anspruch 9, **dadurch gekennzeichnet, dass** die Dämpfungseinrichtung (28, 48, 58, 68, 88) ein Fluiddämpfer ist.

16. Aufhängungssystem für ein Fahrerhaus nach einem der obigen Ansprüche 1 - 13, **dadurch gekennzeichnet, dass** zwischen inneren Teilen (93) der Hebelarme (91) an einer Position entfernt von dem ersten Drehgelenk (P1) ein quer verlaufender Torsionsstab (98) montiert ist.

17. Aufhängungssystem für ein Fahrerhaus nach Anspruch 16, **dadurch gekennzeichnet, dass** ein quer verlaufender zentraler Abschnitt (98a) des Torsionsstabs (98) an einer unteren Oberfläche des Fahrerhauses (12) montiert ist und gegenüberliegende Schenkelabschnitte (98b), die sich von entgegengesetzten Enden des zentralen Abschnitts (98a) in einem Winkel erstrecken, angrenzend an das zweite Drehgelenk (P2) der jeweiligen Hebelarme (91) montiert sind.

18. Aufhängungssystem für ein Fahrerhaus nach einem der obigen Ansprüche 1 - 17, **dadurch gekennzeichnet, dass** das Fahrerhaus (12) ein nach vorne kippbares Fahrerhaus (12) ist und dass der Träger (22, 32, 42, 52, 62, 72, 82, 92) angrenzend an das erste Drehgelenk (P1) des Hebelarms (21, 31, 41, 51, 61, 71, 81, 91) mit einer Klinke zur Befestigung eines hinteren Endes des Fahrerhauses (12) versehen ist.

19. Fahrzeug (11), das mit einem Aufhängungssystem (17) für ein Fahrerhaus nach Anspruch 1 versehen ist.

## Revendications

1. Système de suspension de cabine de véhicule (17) supportant la cabine (12) sur un châssis longitudinal (13), où la cabine (12) est située au-dessus du châssis (13), ledit système de suspension de cabine (17) comprenant, sur des côtés opposés du châssis (13), une paire de moyens formant ressort (24, 34, 44, 54, 64, 74, 84, 94) espacés latéralement sur lesquels s'appuie la cabine (12), et un dispositif de résistance au balancement pouvant fonctionner de manière à résister à un mouvement vertical d'un côté de la cabine (12) par rapport à l'autre côté de la cabine (12) et à inhiber un mouvement de balancement latéral de la cabine (12) par rapport au châssis (13), dans lequel, sur des côtés opposés du véhicule (11), le dispositif de résistance au balancement comprend un balancier (21, 31, 41, 51, 61, 71, 81, 91) agencé transversalement par rapport au châssis (13), **caractérisé en ce que** le balancier (21, 31, 41, 51, 61, 71, 81, 91) est fixé à une première articulation rotoïde (P1) sur un support (22, 32, 42, 52, 62, 72, 82, 92) monté sur le châssis (13), une extrémité intérieure (27, 37, 47, 57, 67, 87, 97) du balancier (21, 31, 41, 51, 61, 71, 81, 91) est fixée à un moyen formant amortisseur (28, 38, 48, 58, 68, 78, 88, 98) au niveau d'une deuxième articulation rotoïde (P2) distante de la première articulation rotoïde (P1), et une extrémité extérieure du balancier (21, 31, 41, 51, 61, 71, 81, 91) est fixée à une troisième articulation rotoïde (P3) adjacente à une surface latérale extérieure de la cabine (12).

2. Système de suspension de cabine selon la revendication 1, **caractérisé en ce que** l'extrémité extérieure du balancier (21, 31, 41, 51, 61, 71, 81, 91) est fixée à la cabine (12) par une bague souple (26, 46, 56, 66, 76, 86, 96).

3. Système de suspension de cabine selon la revendication 1, **caractérisé en ce que** l'extrémité extérieure (35) du balancier (31) est fixée à la cabine (12) par une liaison pivotante intermédiaire (36a).

4. Système de suspension de cabine selon la revendication 3, **caractérisé en ce qu'**un amortisseur (36b) est monté entre le balancier (31) adjacent au support (32) pour la première articulation rotoïde (P1) du balancier (31) et la cabine (12) adjacente à la liaison pivotante (36a).

5. Système de suspension de cabine selon la revendication 1, **caractérisé en ce que** le moyen formant ressort (64, 74) est fixé à une partie intérieure (63, 73) du balancier (61, 71) au niveau d'un point (PL) situé sous la cabine (12).

6. Système de suspension de cabine selon la revendication 5, **caractérisé en ce que** le moyen formant rotor (24, 34, 44, 54, 64, 74, 84, 94) et le moyen formant amortisseur (28, 38, 48, 58, 68, 78, 88, 98) est une unité combinée (64, 74).

7. Système de suspension de cabine selon la revendication 1, **caractérisé en ce que** le moyen formant ressort (24, 34, 44, 54, 84, 94) est fixé au châssis (13) au niveau d'un point (PF) situé sous la cabine (12).

8. Système de suspension de cabine selon la revendication 7, **caractérisé en ce que** le moyen formant ressort (24, 34, 44, 54, 84, 94) est fixé au châssis (13) au niveau d'un point (PF) déplacé longitudinalement à partir du balancier (21, 31, 41, 51, 81, 91).

9. Système de suspension de cabine selon la revendication 5 ou 7, **caractérisé en ce que** les extrémités intérieures (27, 37, 47, 57, 67, 87 ; 29, 49, 69, 89) des balanciers (21, 31, 41, 61, 71, 81) sur des côtés opposés du véhicule (11) sont reliées par au moins un moyen formant amortisseur (28, 38, 48, 68, 78, 88).

10. Système de suspension de cabine selon la revendication 9, **caractérisé en ce que** le moyen formant amortisseur (28, 38, 68, 78) est agencé dans un plan horizontal.

11. Système de suspension de cabine selon la revendication 9, **caractérisé en ce que** les extrémités intérieures (47, 87 ; 49, 89) des balanciers (41, 81) sont verticalement séparées et s'étendent au moins dans un plan vertical commun dans la direction longitudinale du véhicule (11).

12. Système de suspension de cabine selon la revendication 11, **caractérisé en ce que** le moyen formant amortisseur (48, 88) est agencé dans un plan vertical transversal entre les extrémités intérieures (47, 87 ; 49, 89) desdits balanciers (41,81).

13. Système de suspension de cabine selon la revendication 12, **caractérisé en ce que** le moyen formant amortisseur (48, 88) est agencé dans une position verticale.

14. Système de suspension de cabine selon la revendication 9, **caractérisé en ce que** le moyen formant amortisseur (38, 78) est un ressort enroulé.

15. Système de suspension de cabine selon la revendication 9, **caractérisé en ce que** le moyen formant amortisseur (28, 48, 58, 68, 88) est un amortisseur hydraulique.

16. Système de suspension de cabine selon l'une quelconque des revendications 1 à 13, **caractérisé en ce qu'**une barre de torsion transversale (98) est montée entre des parties intérieures (93) des balanciers (91) au niveau d'une position distante de la première articulation rotoïde (P1).

17. Système de suspension de cabine selon la revendication 16, **caractérisé en ce qu'**une section centrale transversale (98a) de la barre de torsion (98) est montée sur une surface inférieure de la cabine (12) et des sections formant jambe (98b) opposées s'étendant selon un angle par rapport à des extrémités opposées de ladite section centrale (98a) sont montées adjacentes à la deuxième articulation rotoïde (P2) des balanciers (91) respectifs.

18. Système de suspension de cabine selon l'une quelconque des revendications 1 à 17, **caractérisé en ce que** la cabine (12) est une cabine (12) pouvant être basculée vers l'avant et le support (22, 32, 42, 52, 62, 72, 82, 92) adjacent à la première articulation rotoïde (P1) du balancier (21, 31, 41, 51, 61, 71, 81, 91) est muni d'un linguet pour immobiliser une extrémité arrière de la cabine (12).

19. Véhicule (11) muni d'un système de suspension de cabine (17) selon la revendication 1.
